# EUROPEAN PATENT SPECIFICATION

(11) **EP 3 520 620 B1**
(45) Date of publication and mention of the grant of the patent: **10.04.2024**
(21) Application number: 17855680.9
(22) Date of filing: 11.09.2017
(51) Int. Cl.: A23D 7/00, A23D 7/005, A23L 2/385, A23L 2/66, A23L 2/38, A23L 2/52, A23L 33/115

(54) **PREMIX FOR PREPARING EMULSION COMPOSITION, AND COMPOSITION USING SAME**
VORMISCHUNG ZUR HERSTELLUNG EINER EMULSIONSZUSAMMENSETZUNG UND ZUSAMMENSETZUNG DAMIT
PRÉMÉLANGE POUR LA PRÉPARATION D'UNE COMPOSITION SOUS FORME D'ÉMULSION, ET COMPOSITION L'UTILISANT

(30) Priority: 27.09.2016 JP 2016188390
(43) Date of publication of application: 07.08.2019
(73) Proprietor: Fuji Oil Holdings Inc., Izumisano-shi, Osaka 598-8540 (JP)
(72) Inventor: ITO, Kazutaka, Tsukubamirai-shi Ibaraki 300-2436 (JP); KATO, Masaharu, Izumisano-shi Osaka 598-8540 (JP); MORIKAWA, Miwako, Izumisano-shi Osaka 598-8540 (JP)
(74) Representative: Becker Kurig & Partner Patentanwälte mbB
(86) International application number: PCT/JP2017/032615
(87) International publication number: WO 2018/061723

(56) References cited:
- WO-A1-2016/067804
- JP-A- H07 313 055
- JP-A- H10 276 669
- JP-A- 2004 083 874
- JP-A- 2005 185 234
- US-A1- 2014 057 039
- Colin Ward: "The development of DHA canola, a sustainable source of essential long-chain omega-3 oils", CSIROpedia, 6 September 2013 (2013-09-06), pages 1-9, XP055712821, Retrieved from the Internet: URL:https://csiropedia.csiro.au/dha-canola / [retrieved on 2020-07-08]

## Description

### [Technical Field]

The present invention relates to a premix for preparing an emulsion composition, and methods of preparing and using the same.

### [Background Art]

Although highly unsaturated fatty acids typified by docosahexaenoic acid (DHA) and eicosapentaenoic acid (EPA) have attracted much attention because of their health benefits, since they are easily oxidized, there are few examples in which they are used in general foods.

For example, in Patent Literature 1, foods containing DHA are described, and milk is described as an example of such a food.

In addition, in Patent Literature 2, milk containing DHA and the like as nutrition components is described.

US2014/0057039 discloses the stabilisation of omega-3 fatty acids.

### [Reference List]

### [Patent Literature]

[Patent Literature 1]
   Japanese Patent Application Laid-Open No. H7-227227
[Patent Literature 2]
   Japanese Patent Application Laid-Open No. 2002-209513

### [Summary of Invention]

### [Technical Problem]

An objective of the present invention relates to a premix for preparing an emulsion composition which makes it possible to easily prepare foods containing a highly unsaturated fatty acid such as DHA or EPA and a method of producing an emulsion composition using the same.

### [Solution to Problem]

In order to solve the above problems, first, the inventors examined documents of the related art in detail.

Patent Literature 1 describes milk containing DHA and the like, but it is necessary to use a polyhydric alcohol or a water-containing polyhydric alcohol as a hydrophilic medium, and realization may be limited.

Patent Literature 2 describes milk containing DHA and the like as nutrition components, but they are added as a capsule, and this addition is very complicated.

The inventors conducted further extensive studies, and as a result, found that, by mixing oils and fats containing a highly unsaturated fatty acid with oils and fats having a predetermined melting point in advance to form an oil phase, and mixing this oil phase with an aqueous phase to prepare a premix for preparing an emulsion composition as an oil-in-water type emulsion composition, a composition prepared using the same could be used to obtain a product with favorable flavor in which the occurrence of an off-flavor derived from a highly unsaturated fatty acid is reduced, and thereby completed the present invention.

That is, the present invention is defined in claims 1-6.

### [Advantageous Effects of Invention]

According to the present invention, it is possible to obtain a premix for preparing an emulsion composition which makes it possible to easily prepare a beverage and the like containing a highly unsaturated fat such as DHA and EPA, and it is possible to obtain a food or drink product in which the occurrence of an off-flavor is reduced even though a highly unsaturated fatty acid is contained using the same.

### [Description of Embodiments]

In the present invention, oils and fats containing DHA or EPA are defined as those in which one or more selected from DHA and EPA is contained as one or more of the constituent fatty acids of the oils and fats, that is, triglycerides.

In the present invention, an amount of DHA or EPA refers to an amount of DHA or EPA as a fatty acid in oils and fats containing DHA or EPA as a constituent fatty acid.

The present invention relates to a premix for preparing an emulsion composition (hereinafter simply referred to as a premix) which makes it possible to easily prepare foods containing a highly unsaturated fatty acid such as DHA and EPA and an emulsion composition using the same. Here, in order to be called a "premix for preparing an emulsion composition," the premix itself needs to have favorable flavor, and also needs to be stably emulsified and withstand distribution. A specific evaluation method will be described in examples.

The premix according to the present invention is an oil-in-water type emulsified oil and fat composition. Here, in the present invention, oils and fats containing a highly unsaturated fatty acid subjected to an antioxidant treatment may be used as necessary. Then, when an aqueous phase is dispersed according to the antioxidant treatment for the oils and fats containing a highly unsaturated fatty acid, strictly speaking, double emulsification of W/O/W is caused. In the present invention, a composition related to an emulsification system in which the outmost phase is an aqueous phase and an oil phase is present therein including such double emulsification is referred to as an oil-in-water type emulsified oil and fat composition.

In the present invention, oils and fats containing DHA and EPA are used. The oils and fats may be derived from any substance. Concentrations of DHA and EPA in oils and fats containing DHA and/or EPA are not limited. However, in the premix for preparing an emulsion composition, a total amount of DHA and EPA is 0.05 to 30 weight%. The amount is preferably 0.07 to 27 weight% and more preferably 0.09 to 25 weight%. When an appropriate amount is included, it is possible to obtain foods and drinks with favorable flavor while containing DHA and the like using this premix.

Here, DHA and EPA are present as constituent components of triglycerides in oils and fats, and of course, are not present as fatty acids in the present invention. Thus, their amounts are values measured as fatty acids in analysis.

Oils and fats containing DHA and/or EPA that have been subjected to an antioxidant treatment are used. An antioxidant treatment method can be appropriately selected. As an example, a method in which an aqueous phase in which a water-soluble antioxidant has dissolved is dispersed in an oil phase containing oils and fats containing a highly unsaturated fatty acid can be exemplified.

Oils and fats containing DHA and EPA in which an aqueous phase in which a water-soluble antioxidant is contained in the aqueous phase at 2.5 to 65 weight%, and additionally a carbohydrate is added so that a water-soluble solid content in the aqueous phase is 18 to 79 weight% in total is dispersed at 1 to 38 weight% in an oil phase containing oils and fats containing DHA and/or EPA are used. Here, in the oils and fats, water is preferably contained at 0.35 to 18 weight%.

As the water-soluble antioxidant, vitamin C and/or catechin are preferably used. An amount thereof in the aqueous phase is more preferably 10 to 63 weight% and further more preferably 18 to 28 weight%.

As the carbohydrate, sucrose is preferably used, and more preferably, an amount thereof in the aqueous phase is added so that the water-soluble solid content is 67 to 77 weight% in total.

More preferably, the aqueous phase is added so that an amount thereof is 1.5 to 4 weight%. Thus, more preferably, the oils and fats subjected to the antioxidant treatment contain water at 0.4 to 1 weight%.

When such oils and fats are used, it is possible to obtain foods and drinks with more favorable flavor while containing DHA and the like using this premix.

In the present invention, oils and fats having a melting point of 10 to 42 °C are used. The melting point is more preferably 15 to 41 °C and further more preferably 20 to 41 °C. When oils and fats having an appropriate melting point are used, it is possible to obtain foods and drinks with favorable flavor while containing DHA and the like using this premix.

As oils and fats having a melting point of 10 to 42 °C, one or more selected from among various types of hydrogenated oils, fractionated oils, and transesterified oils can be used according to a processing method. Lauric oils and fats are used.

Lauric oils and fats are oils and fats containing lauric acid as a constituent fatty acid at 10 weight% or more. Specifically, coconut oil, palm kernel oil and their fractionated oils, hydrogenated oils, and transesterified oils may be exemplified.

It is necessary for an amount of oils and fats having a melting point of 10 to 42 °C in the oil phase to be 25 to 99.5 weight%. The amount is more preferably 30 to 90 weight% and further more preferably 35 to 85 weight%.

In addition, it is necessary for oils and fats having a melting point of 10 to 42 °C to be contained in an amount of 0.8 times the weight of a total amount of DHA and EPA. The upper limit is 500 times the weight or less, and preferably 400 times the weight or less.

When an appropriate amount of the oils and fats is used, it is possible to obtain foods and drinks with favorable flavor while containing DHA and the like using this premix.

In the present invention, oils and fats containing DHA and EPA are mixed with oils and fats having a melting point of 10 to 42 °C to prepare an oil phase. In this case, of course, oils and fats in a molten state are mixed.

In the present invention, an aqueous phase of 0.8 to 280 times the weight of an oil phase is used. The amount is more preferably 1 to 200 times the weight and more preferably 4 to 150 times the weight. When an appropriate amount of the aqueous phase is used, it is possible to obtain foods and drinks with favorable flavor while containing DHA and the like using this premix.

Here, water soluble proteins are preferably dissolved in the aqueous phase. The dissolved water soluble proteins include various animal and vegetable proteins including milk protein and soy protein, and milk protein.

More specifically, as the aqueous phase, at least one selected from among milk, raw milk, skimmed milk, defatted concentrated milk, milk whey, and soymilk is used. At least one selected from among milk, raw milk, and defatted concentrated milk is preferable. Raw milk is more preferable. In addition, a substance in which skimmed powder milk, whole powder milk, or whey powder is dissolved in water can be used. Here, in the present invention, these are referred to as an "aqueous solvent" in some cases.

When an appropriate aqueous phase is used, it is possible to obtain foods and drinks with favorable flavor while containing DHA and the like using this premix.

In the present invention, an emulsifier is used. Regarding the emulsifier to be used, as a water-soluble emulsifier, at least one selected from among a polyglycerin fatty acid ester, polysorbate, a sorbitan fatty acid ester, a sucrose fatty acid ester, and a glycerin fatty acid ester is used, and preferably, at least one selected from among a polyglycerin fatty acid ester and a sucrose fatty acid ester can be used. The oil-soluble emulsifier include polyglycerol condensed ricinoleate, a sucrose fatty acid ester, a glycerin fatty acid ester and lecithin, and a sucrose fatty acid ester. Here more preferably, both the water-soluble emulsifier and the oil-soluble emulsifier are used.

Here, in the present invention, an emulsifier having a Hydrophile-Lipophile Balance (HLB) of 7 or more is defined as a water-soluble emulsifier and an emulsifier having an HLB of less than 7 is defined as an oil-soluble emulsifier.

Regarding an amount of the emulsifier used, an amount of the water-soluble emulsifier in a premix is 0.005 to 3 weight%, and preferably 0.007 to 2 weight%. An amount of the oil-soluble emulsifier in a premix is 0.1 to 3 weight% and preferably 0.3 to 2 weight%.

When an appropriate emulsifier is used in an appropriate amount, it is possible to obtain foods and drinks with favorable flavor while containing DHA and the like using this premix.

The premix produced according to a method of producing a premix for preparing an emulsion composition of the present invention can be used for various foods and drinks. That is, the premix is diluted by a factor of 1 to 100, and thus a food or drink product containing DHA and EPA can be produced. Here, 1-fold dilution refers to a case in which the premix itself is eaten as a food or drink product.

Specifically, when the premix is diluted with raw milk, a milk beverage containing DHA and EPA is obtained. In addition, when the premix is used as one material of a filling as an emulsion composition, the filling containing DHA and EPA can be obtained.

The food or drink product obtained by such a method has a significant improvement regarding an off-flavor derived from DHA and EPA compared to a case in which no premix is used.

That is, when the premix according to the present invention is used, an off-flavor derived from DHA and EPA can be reduced in a food or drink product containing DHA and EPA, and this premix is referred to as an emulsion composition preparation.

Here, since the premix according to the present invention is an oil-in-water type emulsion composition, it is appropriate to prepare an emulsion composition food or drink product which is white and turbid in principle and is not conspicuously murky. However, this does not preclude the premix from being used for a food or drink product which is not an emulsion composition.

Examples will be shown below.

### Examples

Study 1 Antioxidant treatment for oils and fats containing DHA and EPA
In the formulation in Table 1-1, according to "o Antioxidant treatment method for oils and fats containing DHA and EPA," an antioxidant treatment was performed on oils and fats containing a highly unsaturated fatty acid.

**Table 1-1 Formulation**

| | | Test Example 1 |
|---|---|---|
| Aqueous phase | Vitamin C | 0.34 |
| | Catechin | 0.21 |
| | Powder sugar | 1.17 |
| | Water | 0.67 |
| Oil phase | Emulsifier | 1.86 |
| | Soybean oil | 10.75 |
| | PUFA oil 1 | 85.00 |
| Sum | | 100.00 |

### (Unit in formulation is weight%)

· For catechin, "Sunphenon 90S" (commercially available from Taiyo Kagaku Co. Ltd.) was used.
· For an emulsifier, a polyglycerol condensed ricinoleic acid ester "CRS-75" (commercially available from Sakamoto Yakuhin Kogyo Co., Ltd.) was used.
· For powder sugar, granulated powder sugar was used.
· For soybean oil, "soybean white oil" (commercially available from Fuji Oil Co., Ltd.) was used.
· For PUFA oil 1, oils and fats containing DHA and EPA at 48.8 weight% in total were used.
· In Test Example 1, an amount of a water-soluble antioxidant in the aqueous phase was 23.0 mass%.
· In Test Example 1, an amount of a water-soluble solid content in the aqueous phase was 72 mass%.
· In Test Example 1, an amount of the aqueous phase was 2.39 mass%.
· Hereinafter, oils and fats of Test Example 1 will be referred to as a "stabilized PUFA oil 1."

### ∘ Antioxidant treatment method for oils and fats containing DHA and EPA

1. Components classified into an aqueous phase and components classified into an oil phase were mixed together and dissolved.
2. The aqueous phase and the oil phase were mixed together and substantially emulsified.
3. The emulsion solution of 2 was emulsified using a high pressure homogenizer (37 MPa, 20 passes).

### Study 2 Preparation of a premix for preparing an emulsion composition

Based on the formulation in Table 2-1, according to "o Method of preparing a premix for preparing an emulsion composition," a premix for preparing an emulsion composition was prepared.

Emulsion stability and flavor of the obtained premix were evaluated according to the method described below. The results are shown in Table 2-2.

**Table 2-1 Formulation of premix for preparing an emulsion composition**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Aqueous phase | Raw milk | | 90.23% | 90.23% | 90.85% | 80.49% | 90.85% | 90.85% | 90.85% | - | - | - |
| | Fat-free milk | | - | - | - | - | - | - | - | 80.49% | - | - |
| | Skimmed powder milk | | - | - | - | - | - | - | - | - | 8.3% | 7.2% |
| | Water | | - | - | - | - | - | - | - | - | 82.55% | 73.29% |
| | Emulsifier 1 | | 1.17% | 1.17% | 0.75% | 1.61% | 0.75% | 0.75% | 0.75% | 1.61% | 0.75% | 1.61% |
| | Emulsifier 2 | | - | - | - | - | - | - | - | - | - | - |
| Oil phase | Stabilized PUFA oil 1 | | 4.3% | 4.3% | 2.8% | 6.0% | 2.8% | 2.8% | 2.8% | 6.0% | 2.8% | 6.0% |
| | Oils and fats (A) | Oils and fats 1 | 4.3% | - | 5.6% | - | - | - | - | - | - | - |
| | | Oils and fats 2 | - | 4.3% | - | 11.9% | 5.6% | - | - | 11.9% | 5.6% | 11.9% |
| | | Oils and fats 3 | - | - | - | - | - | - | 5.6% | - | - | - |
| | | Oils and fats 4 | - | - | - | - | - | 5.6% | - | - | - | - |
| | | Oils and fats 5 | - | - | - | - | - | - | - | - | - | - |
| | | Oils and fats 6 | - | - | - | - | - | - | - | - | - | - |
| | Emulsifier 3 | | - | - | - | - | - | - | - | - | - | - |
| | Emulsifier 4 | | - | - | - | - | - | - | - | - | - | - |
| Sum | | | 100.00% | 100.00% | 100.00% | 100.00% | 100.00% | 100.00% | 100.00% | 100.00% | 100.00% | 100.00% |
| Amount of oils and fats having a melting point of 10 to 42 °C in the oil phase (weight%) | | | 50.00% | 50.00% | 66.67% | 66.48% | 66.67% | 66.67% | 66.67% | 66.48% | 66.67% | 66.48% |
| Aqueous phase/oil phase | | | 10.6 | 10.6 | 10.9 | 4.6 | 10.9 | 10.9 | 10.9 | 4.6 | 10.9 | 4.6 |
| Total amount of DHA and EPA in premix (weight%) (B) | | | 1.78% | 1.78% | 1.16% | 2.49% | 1.16% | 1.16% | 1.16% | 2.49% | 1.16% | 2.49% |
| Oils and fats (A)/(B) | | | 2.4 | 2.4 | 4.8 | 4.8 | 4.8 | 4.8 | 4.8 | 4.8 | 4.8 | 4.8 |

| | | | Example 11 | Example 12 | Example 13 | Example 14 | Example 15 | Example 16 | Example 17 | Example 18 | Comparative Example 1 | Example 19 |
|---|---|---|---|---|---|---|---|---|---|---|---|---|
| Aqueous phase | Raw milk | | 99.69% | 99.28% | 98.47% | 96.32% | 81.60% | 61.73% | 50.74% | 45.83% | 40.93% | 81.60% |
| | Emulsifier 1 | | 0.01% | 0.02% | 0.03% | 0.08% | 0.40% | 2.17% | 1.06% | 1.17% | 1.27% | 0.40% |
| Oil phase | Stabilized PUFA oil 1 | | 0.1% | 0.2% | 0.5% | 1.2% | 6.0% | 12.0% | 24.1% | 26.5% | 28.9% | 6.0% |
| | Oils and fats (A) | Oils and fats 1 | - | - | - | - | - | - | - | - | - | 12.0% |
| | | Oils and fats 2 | 0.2% | 0.5% | 1.0% | 2.4% | 12.0% | 24.1% | 24.1% | 26.5% | 28.9% | - |
| Sum | | | 100.00% | 100.00% | 100.00% | 100.00% | 100.00% | 100.00% | 100.00% | 100.00% | 100.00% | 100.00% |
| Amount of oils and fats having a melting point of 10 to 42 °C in the oil phase (weight%) | | | 66.7% | 66.7% | 66.7% | 66.7% | 66.7% | 66.7% | 50.0% | 50.0% | 50.0% | 66.7% |
| Aqueous phase/oil phase | | | 274.5 | 137.3 | 68.2 | 26.7 | 4.5 | 1.8 | 1.1 | 0.9 | 0.7 | 4.5 |
| Total amount of DHA and EPA in premix (weight%) (B) | | | 0.05% | 0.10% | 0.20% | 0.50% | 2.50% | 5.00% | 10.00% | 11.00% | 12.00% | 2.50% |
| Oils and fats (A)/(B) | | | 4.8 | 4.8 | 4.8 | 4.8 | 4.8 | 4.8 | 2.4 | 2.4 | 2.4 | 4.8 |

| | | | Example 20 | Example 21 | Example 22 | Comparative Example 2 | Comparative Example 3 | Example 23 | Example 24 | Example 25 | Example 26 | Example 27 |
|---|---|---|---|---|---|---|---|---|---|---|---|---|
| Aqueous phase | Raw milk | | 81.60% | 81.60% | 81.60% | 81.60% | 99.39% | 99.28% | 98.98% | 98.47% | 95.50% | 89.68% |
| | Emulsifier 1 | | 0.40% | 0.40% | 0.40% | 0.40% | 0.01% | 0.02% | 0.02% | 0.03% | 0.10% | 0.22% |
| Oil phase | Stabilized PUFA oil 1 | | 6.0% | 6.0% | 6.0% | 6.0% | 0.5% | 0.5% | 0.5% | 0.5% | 0.5% | 0.5% |
| | Oils and fats (A) | Oils and fats 2 | - | - | - | - | 0.1% | 0.2% | 0.5% | 1.0% | 3.9% | 9.6% |
| | | Oils and fats 3 | 12.0% | - | - | - | - | - | - | - | - | - |
| | | Oils and fats 4 | - | 12.0% | - | - | - | - | - | - | - | - |
| | | Oils and fats 5 | - | - | 12.0% | - | - | - | - | - | - | - |
| | | Oils and fats 6 | - | - | - | 12.0% | - | - | - | - | - | - |
| Sum | | | 100.00% | 100.00% | 100.00% | 100.00% | 100.00% | 100.00% | 100.00% | 100.00% | 100.00% | 100.00% |
| Amount of oils and fats having a melting point of 10 to 42 °C in the oil phase (weight%) | | | 66.7% | 66.7% | 66.7% | 0% | 23.1% | 28.6% | 50.0% | 66.7% | 88.9% | 95.2% |
| Aqueous phase/oil phase | | | 4.5 | 4.5 | 4.5 | 4.5 | 158.5 | 147.1 | 102.7 | 68.2 | 22.1 | 8.9 |
| Total amount of DHA and EPA in premix (weight%) (B) | | | 2.50% | 2.50% | 2.50% | 2.50% | 0.20% | 0.20% | 0.20% | 0.20% | 0.20% | 0.20% |
| Oils and fats (A)/(B) | | | 4.8 | 4.8 | 4.8 | 4.8 | 0.7 | 1.0 | 2.4 | 4.8 | 19.3 | 48.2 |

| | | | Example 28 | Example 29 | Comparative Example 4 | Comparative Example 5 | Comparative Example 6 | Comparative Example 7 | Example 30 | Example 31 | Example 32 | Example 33 |
|---|---|---|---|---|---|---|---|---|---|---|---|---|
| Aqueous phase | Raw milk | | 79.76% | 50.23% | 40.42% | 99.89% | 99.79% | 99.47% | 99.68% | 99.26% | 98.41% | 61.73% |
| | Emulsifier 1 | | 0.44% | 1.07% | 1.28% | 0.01% | 0.01% | 0.03% | 0.02% | 0.04% | 0.09% | - |
| | Emulsifier 2 | | - | - | - | - | - | - | - | - | - | 2.17% |
| Oil phase | Stabilized PUFA oil 1 | | 0.5% | 0.5% | 0.5% | 0.1% | 0.2% | 0.5% | 0.1% | 0.2% | 0.5% | 12.0% |
| | Oils and fats (A) | Oils and fats 1 | - | - | - | - | - | - | 0.2% | 0.5% | 1.0% | - |
| | | Oils and fats 2 | 19.3% | 48.2% | 57.8% | - | - | - | - | - | - | 24.1% |
| Sum | | | 100.00% | 100.00% | 100.00% | 100.00% | 100.00% | 100.00% | 100.00% | 100.00% | 100.00% | 100.00% |
| Amount of oils and fats having a melting point of 10 to 42 °C in the oil phase (weight%) | | | 97.6% | 99.0% | 99.2% | 0% | 0% | 0% | 66.6% | 66.7% | 66.7% | 66.7% |
| Aqueous phase/oil phase | | | 4.1 | 1.1 | 0.7 | 825.4 | 413.9 | 206.5 | 275.2 | 137.3 | 68.2 | 1.7 |
| Total amount of DHA and EPA in premix (weight%) (B) | | | 0.20% | 0.20% | 0.20% | 0.05% | 0.10% | 0.20% | 0.05% | 0.10% | 0.20% | 5.00% |
| Oils and fats (A)/(B) | | | 96.4 | 241.0 | 289.2 | - | - | - | 4.8 | 4.8 | 4.8 | 4.8 |

| | | | Example 34 | Example 35 | Example 36 | Example37 |
|---|---|---|---|---|---|---|
| Aqueous phase | Raw milk | | 61.01% | 61.01% | 60.97% | 60.97% |
| | Emulsifier 1 | | 2.17% | 2.17% | - | - |
| | Emulsifier 2 | | - | - | 2.21% | 2.21% |
| Oil phase | Stabilized PUFA oil 1 | | 12.0% | 12.0% | 12.0% | 12.0% |
| | Oils and fats (A) | Oils and fats 1 | - | - | - | - |
| | | Oils and fats 2 | 24.1% | 24.1% | 24.1% | 24.1% |
| | Emulsifier 3 | | 0.72% | - | 0.72% | - |
| | Emulsifier 4 | | - | 0.72% | - | 0.72% |
| Sum | | | 100.00% | 100.00% | 100.00% | 100.00% |
| Amount of oils and fats having a melting point of 10 to 42 °C in the oil phase (weight%) | | | 66.7% | 66.7% | 66.7% | 66.7% |
| Aqueous phase/oil phase | | | 1.7 | 1.7 | 1.7 | 1.7 |
| Total amount of DHA and EPA in premix (weight%) (B) | | | 5.00% | 5.00% | 5.00% | 5.00% |
| Oils and fats (A)/(B) | | | 4.8 | 4.8 | 4.8 | 4.8 |

### (Unit in formulation is weight%)

· For an emulsifier 1, a polyglycerin fatty acid ester "Sunsoft A-181E" (HLB: 13) (commercially available from Taiyo Kagaku Co. Ltd.) was used.
· For an emulsifier 2, a sucrose fatty acid ester "S-1670" (HLB: 16) (commercially available from Mitsubishi-Chemical Foods Corporation) was used.
· For an emulsifier 3, a distilled monoglyceride "Rikemal H-100" (HLB: 4.3) (commercially available from Riken Vitamin Co., Ltd.) was used.
·For an emulsifier 4, a sucrose fatty acid ester "S-170" (HLB: 1 or less) (commercially available from Mitsubishi-Chemical Foods Corporation) was used.
· For oils and fats1, a "refined palm kernel oil" (melting point of 27.5 °C) (lauric oils and fats) (commercially available from Fuji Oil Co., Ltd.) was used.
· For oils and fats 2, a refined hardened palm kernel oil (melting point of 38 °C) "Nyumerarin 38" (lauric oils and fats) (commercially available from Fuji Oil Co., Ltd.) was used.
· For oils and fats 3, a palm-based transesterified oil "Meranosando 38" (melting point: 38 °C) (non-lauric oils and fats) (commercially available from Fuji Oil Co., Ltd.) was used.
· For oils and fats 4, a palm and rapeseed mixed hardened oil "Melano Fresh 31" (melting point: 31 °C) (non-lauric oils and fats) (commercially available from Fuji Oil Co., Ltd.) was used.
· For oils and fats 5, a super palm olein "Palm Ace 10" (melting point: 10 °C) (non-lauric oils and fats) (commercially available from Fuji Oil Co., Ltd.) was used.
· For oils and fats 6, a soybean white oil (melting point: 0 °C or less) (non-lauric oils and fats) (commercially available from Fuji Oil Co., Ltd.) was used.
· In the table, the "aqueous phase/oil phase" shows times the weight of the aqueous phase with respect to the oil phase.
· In the table, the "oils and fats (A)/(B)" shows times the weight of oils and fats having a melting point of 10 to 42 °C with respect to a total amount of DHA and EPA.

### ∘ Method of preparing a premix for preparing an emulsion composition 1

1. According to the formulation, raw material classified into an aqueous phase and an oil phase were mixed to prepare an aqueous phase and an oil phase.
2. The oil phase was added to the stirred aqueous phase and mixed.
3. The mixture of 2 was homogenized using a high pressure homogenizer (150 kg/cm2).
4. After sterilization, the mixture was cooled to 5 °C.

### o Method of evaluating emulsion stability of a premix

1 The prepared premix was left at 3 to 7 °C for 12 hours.
2 After being left, a separation state was checked visually and the results were scored according to the following criteria.
Scoring criteria
5 points: no separation was observed at all.
4 points: very slight separation just enough that the start of separation could be seen on close inspection was observed.
3 points: slight separation was observed.
2 points: it was possible to determine separation at first glance.
1 point: separation was almost complete.
4 points or more was determined to be satisfactory.

### ∘ Method of evaluating flavor of premix

1 The prepared premix was left at 3 to 7 °C for 12 hours.
2 Three panelists scored according to the following criteria by consultation.
Scoring criteria
5 points: no off-flavor was perceived at all.
4 points: a very slight off-flavor was perceived by one or fewer among three panelists
3 points: two or more among three panelists perceived an off-flavor, but the off-flavor was within an acceptable range
2 points: all three panelists perceived an off-flavor and the off-flavor exceeded an acceptable range
1 point: All three panelists perceived an off-flavor and the off-flavor greatly exceeded an acceptable range
3 points or more was determined to be satisfactory.

**∘Table 2-2 Evaluation results of emulsion stability and flavor**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Emulsifiability of premix | 5 | 5 | 5 | 5 | 5 | 5 | 5 | 5 | 5 | 5 |
| Flavor of premix | 5 | 5 | 5 | 5 | 5 | 5 | 5 | 3 | 4 | 4 |

| | Example 11 | Example 12 | Example 13 | Example 14 | Example 15 | Example 16 | Example 17 | Example 18 | Comparative Example 1 | Example 19 |
|---|---|---|---|---|---|---|---|---|---|---|
| Emulsifiability of premix | 5 | 5 | 5 | 5 | 5 | 5 | 5 | 3 | 2 | 5 |
| Flavor of premix | 5 | 5 | 5 | 5 | 5 | 5 | 4 | 4 | 4 | 5 |

| | Example 20 | Example 21 | Example 22 | Comparative Example 2 | Comparative Example 3 | Example 23 | Example 24 | Example 25 | Example 26 | Example 27 |
|---|---|---|---|---|---|---|---|---|---|---|
| Emulsifiability of premix | 5 | 5 | 5 | 5 | 5 | 5 | 5 | 5 | 5 | 5 |
| Flavor of premix | 5 | 4 | 3 | 2 | 2 | 3 | 4 | 5 | 5 | 5 |

| | Example 28 | Example 29 | Comparative Example 4 | Comparative Example 5 | Comparative Example 6 | Comparative Example 7 | Example 30 | Example 31 | Example 32 | Example 33 |
|---|---|---|---|---|---|---|---|---|---|---|
| Emulsifiability of premix | 5 | 4 | 2 | 5 | 5 | 5 | 5 | 5 | 5 | 5 |
| Flavor of premix | 5 | 5 | 5 | 2 | 2 | 1 | 4 | 3 | 2 | 5 |

| | Example 34 | Example 35 | Example 36 | Example 37 |
|---|---|---|---|---|
| Emulsifiability of premix | 5 | 5 | 5 | 5 |
| Flavor of premix | 5 | 5 | 5 | 5 |

### Consideration

· According to the studies of Examples 8 to 10, and Example 1, it can be clearly understood that various materials were able to be used as the aqueous phase of the premix. In particular, when raw milk was used as the aqueous phase, flavor became more favorable.
· According to the studies of Examples 19 to 22, and Comparative Example 2, it can be clearly understood that various oils and fats were able to be used as "oils and fats having a melting point of 10 to 42 °C" used for the premix. However, when soybean oil having a melting point of lower than 10 °C was used, no flavor improvement effect was observed (Comparative Example 2). In addition, according to the studies of Comparative Examples 5 to 7, even if oils and fats other than an oil containing DHA and EPA were not used as the oil phase, no flavor improvement effect was observed.
· According to the study of Comparative Example 3, when an amount of oils and fats having a melting point of 10 to 42 °C was not 0.8 times the weight of a total amount of DHA and EPA or more, no flavor improvement effect of the premix was observed.
· According to the studies of Examples 23 to 29 and Comparative Example 4, it can be clearly understood that, when an amount of the aqueous phase was less than 0.8 times the weight of an amount of the oil phase, emulsification in the premix became unstable.

### Study 3 Preparation of beverages

Beverages (milk beverages) were prepared using the premix prepared in Study 2.

The formulations are shown in Table 3-1. The preparation method was performed according to the following "o Method of preparing beverages."

The obtained beverages were evaluated according to the following "o Beverage evaluation method" and the results are shown in Table 3-2.

**Table 3-1 Formulations of beverages**

| | Comparative Example 8 | Comparative Example 9 | Example 38 | Example 39 | Example 40 | Example 41 | Example 42 | Example 43 | Example 44 | Example 45 |
|---|---|---|---|---|---|---|---|---|---|---|
| Premix of Example 1 | - | - | 8.5 | - | - | - | - | - | - | - |
| Premix of Example 2 | - | - | - | 8.5 | - | - | - | - | - | - |
| Premix of Example 3 | - | - | - | - | 13.3 | - | - | - | - | - |
| Premix of Example 4 | - | - | - | - | - | 6.2 | - | - | - | - |
| Premix of Example 5 | - | - | - | - | - | - | 13.3 | - | - | - |
| Premix of Example 6 | - | - | - | - | - | - | - | 13.3 | - | - |
| Premix of Example 7 | - | - | - | - | - | - | - | - | 13.3 | - |
| Premix of Example 8 | - | - | - | - | - | - | - | - | - | 6.2 |
| Raw milk | 99.50 | 99.10 | 91.50 | 91.50 | 86.70 | 93.80 | 86.70 | 86.70 | 86.70 | - |
| Fat-free milk | - | - | - | - | - | - | - | - | - | 93.8 |
| Stabilized PUFA oil 1 | 0.4 | 0.4 | - | - | - | - | - | - | - | - |
| Oils and fats 1 | - | 0.4 | - | - | - | - | - | - | - | - |
| Emulsifier 1 | 0.10 | 0.10 | - | - | - | - | - | - | - | - |
| Sum | 100.00 | 100.00 | 100.00 | 100.00 | 100.00 | 100.00 | 100.00 | 100.00 | 100.00 | 100.00 |
| Total amount of DHA and EPA in food or drink product (weight%) | 0.17 | 0.17 | 0.15 | 0.15 | 0.15 | 0.15 | 0.15 | 0.15 | 0.15 | 0.15 |
| Dilution factor of premix | - | - | 11.8 | 11.8 | 7.5 | 16.1 | 7.5 | 7.5 | 7.5 | 16.1 |

| | Example 46 | Example 47 | Example 48 | Example 49 | Example 50 | Example 51 | Example 52 | Example 53 | Example 54 | Example 55 |
|---|---|---|---|---|---|---|---|---|---|---|
| Premix of Example 9 | 13.3 | - | - | - | - | - | - | - | - | - |
| Premix of Example 10 | - | 6.2 | - | - | - | - | - | - | - | - |
| Premix of Example 12 | - | - | 50.0 | - | - | - | - | - | - | - |
| Premix of Example 13 | - | - | - | 50.0 | - | - | - | - | - | - |
| Premix of Example 14 | - | - | - | - | 20.0 | - | - | - | - | - |
| Premix of Example 15 | - | - | - | - | - | 20.0 | - | - | - | - |
| Premix of Example 16 | - | - | - | - | - | - | 20.0 | - | - | - |
| Premix of Example 17 | - | - | - | - | - | - | - | 30.0 | - | 50.0 |
| Premix of Example 18 | - | - | - | - | - | - | - | - | 30.0 | - |
| Raw milk | - | - | 50.0 | 50.0 | 80.0 | 80.0 | 80.0 | 70.0 | 70.0 | 50.0 |
| Skimmed powder milk | 7.8 | 8.5 | - | - | - | - | - | - | - | - |
| Water | 78.9 | 85.3 | - | - | - | - | - | - | - | - |
| Sum | 100.00 | 100.00 | 100.00 | 100.00 | 100.00 | 100.00 | 100.00 | 100.00 | 100.00 | 100.00 |
| Total amount of DHA and EPA in food or drink product (weight%) | 0.15 | 0.15 | 0.05 | 0.10 | 0.10 | 0.50 | 1.00 | 3.00 | 3.30 | 6.00 |
| Dilution factor of premix | 7.5 | 16.1 | 2.0 | 2.0 | 5.0 | 5.0 | 5.0 | 3.3 | 3.3 | 2.0 |

| | Example 56 | Example 57 | Example 58 | Example 59 | Example 60 |
|---|---|---|---|---|---|
| Premix of Example 33 | 20.0 | - | - | - | - |
| Premix of Example 34 | - | 20.0 | - | - | - |
| Premix of Example 35 | - | - | 20.0 | - | - |
| Premix of Example 36 | - | - | - | 20.0 | - |
| Premix of Example 37 | - | - | - | - | 20.0 |
| Raw milk | 80.0 | 80.0 | 80.0 | 80.0 | 80.0 |
| Sum | 100.0 | 100.0 | 100.0 | 100.0 | 100.0 |
| Total amount of DHA and EPA in food or drink product (weight%) | 0.50 | 0.50 | 0.50 | 0.50 | 0.50 |
| Dilution factor of premix | 5.0 | 5.0 | 5.0 | 5.0 | 5.0 |

### (Unit in formulation is weight%)

### ∘ Method of preparing beverages

### "Comparative Examples 2 and 3"

1. According to the formulation, raw milk, fat-free milk or water was heated to 50 to 55 °C, and the emulsifier 1, and skimmed powder milk were dissolved.
2. According to the formulation, a premix, a stabilized PUFA oil 1, and heated and melted oils and fats 1 were added to 1.
3. The mixture was pre-emulsified at 50 to 55 °C for 15 minutes using a mixer.
4. The mixture was homogenized using a high pressure homogenizer (150 kg/cm²).
5. After sterilization, the mixture was cooled to 5 °C.

### ∘ Beverage evaluation method

Three panelists evaluated samples stored in a refrigerator for 1 day after preparation according to the following criteria. Scoring was performed by consultation.
5 points: no difference from commercially available milk or a milk beverage was perceived
4 points: although slight flavor of a DHA oil was perceived, there was almost no difference
3 points: although the presence of a DHA oil was perceived, it was within an acceptable range
2 points: the presence of a DHA oil was caused a feeling of discomfort
1 point: strong flavor of a DHA oil was perceived and was unpleasant
3 points or more was determined to be satisfactory.

**Table 3-2**

| | Comparative Example 8 | Comparative Example 9 | Example 38 | Example 39 | Example 40 | Example 41 | Example 42 | Example 43 | Example 44 | Example 45 |
|---|---|---|---|---|---|---|---|---|---|---|
| Flavor evaluation | 2 | 2 | 4 | 5 | 5 | 3 | 5 | 5 | 5 | 5 |

| | Example 46 | Example 47 | Example 48 | Example 49 | Example 50 | Example 51 | Example 52 | Example 53 | Example 54 | Example 55 |
|---|---|---|---|---|---|---|---|---|---|---|
| Flavor evaluation | 5 | 5 | 5 | 4 | 3 | 3 | 3 | 4 | 5 | 5 |

| | Example 56 | Example 57 | Example 58 | Example 59 | Example 60 |
|---|---|---|---|---|---|
| Flavor evaluation | 5 | 5 | 5 | 5 | 5 |

### Consideration

· Even when the "stabilized PUFA oil" subjected to an antioxidant treatment was used, when it was used for beverage without preparing a premix, a certain degree of discomfort was perceived. However, when the premix was prepared and beverage was then made, such discomfort was not perceived at all and beverage with favorable flavor was obtained.
· Example 58 had particularly favorable flavor.

## Claims

1. A premix for preparing an emulsion composition, wherein the premix is suitable to be used in a food or drink product containing docosahexaenoic acid, DHA, and eicosapentaenoic acid, EPA, by diluting the premix by a factor of 1 to 100, and wherein the premix satisfies the following requirements:
1 first oils and fats containing DHA and EPA being included in an oil phase, wherein the first oils and fats are triglycerides including DHA and EPA as constituent components, a total amount of DHA and EPA in the premix is 0.05 to 30 weight %, oils and fats containing DHA and EPA in which a first aqueous phase is dispersed at 1 to 38 weight% are used as the first oils and fats, and the first aqueous phase contains a water-soluble antioxidant at 2.5 to 65 weight% and a carbohydrate added so that a water-soluble content in the first aqueous phase is 18 to 79 weight%;
2 second oils and fats having a melting point of 10 to 42 °C being included in the oil phase at 25 to 99.5 weight%, wherein the second oils and fats are lauric oils and fats and amount to 0.8 times to 500 times the weight of the total amount of DHA and EPA;
3 a second aqueous phase being 0.8 to 280 times the weight of the oil phase, wherein the second aqueous phase is at least one selected from among milk, raw milk, skimmed milk, defatted concentrated milk, milk whey, and soymilk, or is a substance in which skimmed powder milk, whole powder milk, or whey powder milk is dissolved in water; and
4 the first aqueous phase, the oil phase and the second aqueous phase constituting a water-in-oil-in-water double emulsion oil and fat composition,
wherein the premix further comprises an emulsifier,
the emulsifier is one or both of a water-soluble emulsifier and an oil-soluble emulsifier,
the water-soluble emulsifier is at least one selected from among a polyglycerin fatty acid ester, polysorbate, a sorbitan fatty acid ester, a sucrose fatty acid ester, and a glycerin fatty acid ester, and when included, an amount of the water-soluble emulsifier in the premix is 0.005 to 3 weight %, and
the oil-soluble emulsifier is at least one selected from among polyglycerol condensed ricinoleate, a sucrose fatty acid ester, a glycerin fatty acid ester and lecithin, and, when included, an amount of the oil-soluble emulsifier in the premix is 0.1 to 3 weight %.

2. The premix for preparing an emulsion composition according to claim 1, wherein water soluble proteins are dissolved in the second aqueous phase.

3. A method of producing a food or drink product containing DHA and EPA comprising diluting the premix for preparing an emulsion composition according to claim 1 by a factor of 1 to 100 by weight.

4. A method of reducing an off-flavor derived from DHA and/or EPA in a food or drink product containing DHA and EPA using the premix according to claim 1.

5. A method of producing a premix for preparing an emulsion composition, wherein the premix is suitable to be used in a food or drink product containing docosahexaenoic acid, DHA, and eicosapentaenoic acid, EPA, by diluting the premix by a factor of 1 to 100,wherein the method comprises the following processes:
1 a process of preparing an oil phase comprising first oils and fats containing DHA and EPA and second oils and fats having a melting point of 10 to 42 °C at 25 to 99.5 weight%, wherein the first oils and fats are triglycerides including DHA and EPA as constituent components, oils and fats containing DHA and EPA in which a first aqueous phase is dispersed at 1 to 38 weight % are used as the first oils and fats, a total amount of DHA and EPA in the premix is 0.05 to 30 weight %, the first aqueous phase contains a water-soluble antioxidant at 2.5 to 65 weight% and a carbohydrate added so that a water-soluble content in the first aqueous phase is 18 to 79 weight%, the second oils and fats having a melting point of 10 to 42 °C are lauric oils and fats and are contained in an amount of 0.8 times to 500 times the weight of the total amount of DHA and EPA;
2 a process of preparing a second aqueous phase having an amount 0.8 to 280 times the weight of the oil phase, wherein the second aqueous phase is at least one selected from among milk, raw milk, skimmed milk, defatted concentrated milk, milk whey, and soymilk, or is a substance in which skimmed powder milk, whole powder milk, or whey powder milk is dissolved in water;
3 a process of incorporating a water-soluble emulsifier and/or an oil-soluble emulsifier, wherein the water-soluble emulsifier is at least one selected from among a polyglycerin fatty acid ester, polysorbate, a sorbitan fatty acid ester, a sucrose fatty acid ester, and a glycerin fatty acid ester, and when included, an amount of the water-soluble emulsifier in the premix is 0.005 to 3 weight %, and the oil-soluble emulsifier is at least one selected from among polyglycerol condensed ricinoleate, a sucrose fatty acid ester, a glycerin fatty acid ester and lecithin, and, when included, an amount of the oil-soluble emulsifier in the premix is 0.1 to 3 weight %; and
4 a process of mixing the oil phase and the second aqueous phase to obtain a water-in-oil-in-water double emulsion oil and fat composition.

6. The method of producing a premix for preparing an emulsion composition according to claim 5, wherein water soluble proteins are dissolved in the aqueous phase.

## Patentansprüche

1. Vormischung zum Herstellen einer Emulsionszusammensetzung, wobei die Vormischung geeignet ist, um in einem Lebensmittel- oder Getränkeprodukt, das Docosahexaensäure, DHA und Eicosapentaensäure, EPA, enthält, durch Verdünnen der Vormischung um einen Faktor von 1 bis 100 verwendet zu werden, und wobei die Vormischung die folgenden Anforderungen erfüllt:
1 erste Öle und Fette, die DHA und EPA enthalten, die in einer Ölphase eingeschlossen sind, wobei die ersten Öle und Fette Triglyceride sind, einschließlich DHA und EPA als Bestandteile, wobei eine Gesamtmenge an DHA und EPA in der Vormischung 0,05 bis 30 Gew.-% beträgt, Öle und Fette, die DHA und EPA enthalten, wobei eine erste wässrige Phase zu 1 bis 38 Gew.-% dispergiert ist, als die ersten Öle und Fette verwendet werden und die erste wässrige Phase ein wasserlösliches Antioxidationsmittel zu 2,5 bis 65 Gew.-% und ein zugesetztes Kohlenhydrat enthält, sodass ein wasserlöslicher Gehalt in der ersten wässrigen Phase 18 bis 79 Gew.-% beträgt;
2 zweite Öle und Fette mit einem Schmelzpunkt von 10 bis 42 °C, die in der Ölphase zu 25 bis 99,5 Gew.-% eingeschlossen sind, wobei die zweiten Öle und Fette Laurinöle und -fette sind und das 0,8-fache bis 500-fache des Gewichts der Gesamtmenge an DHA und EPA betragen;
3 eine zweite wässrige Phase, die das 0,8- bis 280-fache des Gewichts der Ölphase beträgt, wobei die zweite wässrige Phase mindestens eine ist, ausgewählt aus Milch, Rohmilch, Magermilch, entfetteter konzentrierter Milch, Molke und Sojamilch, oder ein Stoff ist, in dem Magermilchpulver, Vollmilchpulver oder Molkenpulver in Wasser aufgelöst ist; und
4 wobei die erste wässrige Phase, die Ölphase und die zweite wässrige Phase eine Wasser-in-ÖI-in-Wasser-Doppelemulsionsöl-
und -fettzusammensetzung bilden,
wobei die Vormischung ferner einen Emulgator umfasst,
der Emulgator einer oder beides von einem wasserlöslichen Emulgator und einem öllöslichen Emulgator ist,
der wasserlösliche Emulgator mindestens einer ist, ausgewählt aus einem Polyglycerinfettsäureester, Polysorbat, einem Sorbitanfettsäureester, einem Saccharosefettsäureester und einem Glycerinfettsäureester, und wenn eingeschlossen, eine Menge des wasserlöslichen Emulgators in der Vormischung 0,005 bis 3 Gew.-% beträgt, und
der öllösliche Emulgator mindestens einer ist, ausgewählt aus polyglycerinkondensiertem Ricinoleat, einem Saccharosefettsäureester, einem Glycerinfettsäureester und Lecithin, und, wenn eingeschlossen, eine Menge des öllöslichen Emulgators in der Vormischung 0,1 bis 3 Gew.-% beträgt.

2. Vormischung zum Herstellen einer Emulsionszusammensetzung nach Anspruch 1, wobei wasserlösliche Proteine in der zweiten wässrigen Phase gelöst sind.

3. Verfahren zum Herstellen eines Lebensmittel- oder Getränkeprodukts, das DHA und EPA enthält, umfassend das Verdünnen der Vormischung zum Herstellen einer Emulsionszusammensetzung nach Anspruch 1 um einen Faktor von 1 bis 100 Gew.-%.

4. Verfahren zum Reduzieren eines von DHA und/oder EPA abgeleiteten Fehlgeschmacks in einem Lebensmittel- oder Getränkeprodukt, das DHA und EPA enthält, unter Verwendung der Vormischung nach Anspruch 1.

5. Verfahren zum Herstellen einer Vormischung zum Herstellen einer Emulsionszusammensetzung, wobei die Vormischung geeignet ist, um in einem Lebensmittel- oder Getränkeprodukt, das Docosahexaensäure, DHA und Eicosapentaensäure, EPA, enthält, durch Verdünnen der Vormischung um einen Faktor von 1 bis 100 verwendet zu werden, wobei das Verfahren die folgenden Prozesse umfasst:
1 einen Prozess zum Herstellen einer Ölphase, umfassend erste Öle und Fette, die DHA und EPA enthalten, und zweite Öle und Fette mit einem Schmelzpunkt von 10 bis 42 °C zu 25 bis 99,5 Gew.-%, wobei die ersten Öle und Fette Triglyceride sind, die DHA und EPA als Bestandteile einschließen, Öle und Fette, die DHA und EPA enthalten, wobei eine erste wässrige Phase zu 1 bis 38 Gew.-% dispergiert sind, als die ersten Öle und Fette verwendet werden, eine Gesamtmenge an DHA und EPA in der Vormischung 0,05 bis 30 Gew.-% beträgt, die erste wässrige Phase ein wasserlösliches Antioxidationsmittel zu 2,5 bis 65 Gew.-% und ein zugesetztes Kohlenhydrat enthält, sodass ein wasserlöslicher Gehalt in der ersten wässrigen Phase 18 bis 79 Gew.-% beträgt, die zweiten Öle und Fette, die einen Schmelzpunkt von 10 bis 42 °C aufweisen, Laurinöle und -fette sind und in einer Menge des 0,8-fachen bis 500-fachen des Gewichts der Gesamtmenge an DHA und EPA enthalten sind;
2 einen Prozess zum Herstellen einer zweiten wässrigen Phase mit einer Menge des 0,8- bis 280-fachen des Gewichts der Ölphase, wobei die zweite wässrige Phase mindestens eine ist, ausgewählt aus Milch, Rohmilch, Magermilch, entfetteter konzentrierter Milch, Molke und Sojamilch, oder ein Stoff ist, in dem Magermilchpulver, Vollmilchpulver oder Molkenpulver in Wasser aufgelöst ist;
3 einen Prozess zum Einbringen eines wasserlöslichen Emulgators und/oder eines öllöslichen Emulgators, wobei der wasserlösliche Emulgator mindestens einer ist, ausgewählt aus einem Polyglycerinfettsäureester, Polysorbat, einem Sorbitanfettsäureester, einem Saccharosefettsäureester und einem Glycerinfettsäureester, und wenn eingeschlossen, eine Menge des wasserlöslichen Emulgators in der Vormischung 0,005 bis 3 Gew.-% beträgt, und der öllösliche Emulgator mindestens einer ist, ausgewählt aus polyglycerinkondensiertem Ricinoleat, einem Saccharosefettsäureester, einem Glycerinfettsäureester und Lecithin, und, wenn eingeschlossen, eine Menge des öllöslichen Emulgators in der Vormischung 0,1 bis 3 Gew.-% beträgt; und
4 einen Prozess zum Mischen der Ölphase und der zweiten wässrigen Phase, um eine Wasser-in-Öl-in-Wasser-Doppelemulsionsöl- und -fettzusammensetzung zu erhalten.

6. Verfahren zum Herstellen einer Vormischung zum Herstellen einer Emulsionszusammensetzung nach Anspruch 5, wobei wasserlösliche Proteine in der wässrigen Phase gelöst sind.

## Revendications

1. Prémélange pour la préparation d'une composition d'émulsion, dans lequel le prémélange est approprié pour être utilisé dans un produit alimentaire ou de boisson contenant de l'acide docosahexaénoïque, DHA, et de l'acide eicosapentaénoïque, EPA, en diluant le prémélange par un facteur de 1 à 100, et dans lequel le prémélange satisfait aux exigences suivantes :
1 des premières huiles et graisses contenant du DHA et de l'EPA étant incluses dans une phase huileuse, dans laquelle les premières huiles et graisses sont des triglycérides comportant du DHA et de l'EPA en tant que composants constitutifs, une quantité totale de DHA et d'EPA dans le prémélange est de 0,05 à 30 % en poids, des huiles et graisses contenant du DHA et de l'EPA dans lesquelles une première phase aqueuse est dispersée à hauteur de 1 à 38 % en poids sont utilisées en tant que premières huiles et graisses, et la première phase aqueuse contient un antioxydant soluble dans l'eau à hauteur de 2,5 à 65 % en poids et un glucide ajouté de sorte qu'une teneur soluble dans l'eau dans la première phase aqueuse est de 18 à 79 % en poids ;
2 des secondes huiles et graisses ayant un point de fusion de 10 à 42 °C étant incluses dans la phase huileuse à hauteur de 25 à 99,5 % en poids, dans lequel les secondes huiles et graisses sont des huiles et graisses lauriques et représentent de 0,8 fois à 500 fois le poids de la quantité totale de DHA et d'EPA ;
3 une seconde phase aqueuse représentant de 0,8 à 280 fois le poids de la phase huileuse, dans lequel la seconde phase aqueuse est au moins l'une choisie parmi le lait, le lait cru, le lait écrémé, le lait concentré dégraissé, le lactosérum et le lait de soja, ou est une substance dans laquelle du lait écrémé en poudre, du lait entier en poudre ou du lactosérum en poudre est dissous dans de l'eau ; et
4 la première phase aqueuse, la phase huileuse et la seconde phase aqueuse constituant une composition d'huile et graisse à double émulsion eau-dans-huile-dans-eau,
dans lequel le prémélange comprend en outre un émulsifiant,
l'émulsifiant est l'un ou les deux parmi un émulsifiant soluble dans l'eau et un émulsifiant soluble dans l'huile,
l'émulsifiant soluble dans l'eau est au moins l'un choisi parmi un ester d'acide gras de polyglycérol, un polysorbate, un ester d'acide gras de sorbitane, un ester d'acide gras de saccharose, et un ester d'acide gras de glycérol, et lorsqu'il est inclus, une quantité de l'émulsifiant soluble dans l'eau dans le prémélange est de 0,005 à 3 % en poids, et
l'émulsifiant soluble dans l'huile est au moins l'un choisi parmi le ricinoléate condensé de polyglycérol, un ester d'acide gras de saccharose, un ester d'acide gras de glycérol et la lécithine, et, lorsqu'il est inclus, une quantité de l'émulsifiant soluble dans l'huile dans le prémélange est de 0,1 à 3 % en poids.

2. Prémélange pour la préparation d'une composition d'émulsion selon la revendication 1, dans lequel des protéines solubles dans l'eau sont dissoutes dans la seconde phase aqueuse.

3. Procédé de production d'un produit alimentaire ou de boisson contenant du DHA et de l'EPA comprenant la dilution du prémélange pour la préparation d'une composition d'émulsion selon la revendication 1 par un facteur de 1 à 100 en poids.

4. Procédé de réduction d'un mauvais goût dérivé de DHA et/ou d'EPA dans un produit alimentaire ou de boisson contenant du DHA et de l'EPA à l'aide du prémélange selon la revendication 1.

5. Procédé de production d'un prémélange pour la préparation d'une composition d'émulsion, dans lequel le prémélange est approprié pour être utilisé dans un produit alimentaire ou de boisson contenant de l'acide docosahexaénoïque, DHA, et de l'acide eicosapentaénoïque, EPA, en diluant le prémélange par un facteur de 1 à 100, dans lequel le procédé comprend les processus suivants :
1 un processus de préparation d'une phase huileuse comprenant des premières huiles et graisses contenant du DHA et de l'EPA et des secondes huiles et des graisses ayant un point de fusion de 10 à 42 °C à hauteur de 25 à 99,5 % en poids, dans lequel les premières huiles et graisses sont des triglycérides comportant du DHA et de l'EPA en tant que composants constitutifs, des huiles et graisses contenant du DHA et de l'EPA dans lesquelles une première phase aqueuse est dispersée à hauteur de 1 à 38 % en poids sont utilisées en tant que premières huiles et graisses, une quantité totale de DHA et d'EPA dans le prémélange est de 0,05 à 30 % en poids, la première phase aqueuse contient un antioxydant soluble dans l'eau à hauteur de 2,5 à 65 % en poids et un glucide ajouté de sorte qu'une teneur soluble dans l'eau dans la première phase aqueuse est de 18 à 79 % en poids, les secondes huiles et graisses ayant un point de fusion de 10 à 42 °C sont des huiles et graisses lauriques et sont contenues en une quantité de 0,8 fois à 500 fois le poids de la quantité totale de DHA et d'EPA ;
2 un processus de préparation d'une seconde phase aqueuse ayant une quantité de 0,8 à 280 fois le poids de la phase huileuse, dans lequel la seconde phase aqueuse est au moins l'une choisie parmi le lait, le lait cru, le lait écrémé, le lait concentré dégraissé, le lactosérum et le lait de soja, ou est une substance dans laquelle du lait écrémé en poudre, du lait entier en poudre ou du lactosérum en poudre est dissous dans de l'eau ;
3 un processus d'incorporation d'un émulsifiant soluble dans l'eau et/ou d'un émulsifiant soluble dans l'huile, dans lequel l'émulsifiant soluble dans l'eau est au moins l'un choisi parmi un ester d'acide gras de polyglycérol, un polysorbate, un ester d'acide gras de sorbitane, un ester d'acide gras de saccharose, et un ester d'acide gras de glycérol, et lorsqu'il est inclus, une quantité de l'émulsifiant soluble dans l'eau dans le prémélange est de 0,005 à 3 % en poids, et l'émulsifiant soluble dans l'huile est au moins l'un choisi parmi le ricinoléate condensé de polyglycérol, un ester d'acide gras de saccharose, un ester d'acide gras de glycérol et la lécithine, et, lorsqu'il est inclus, une quantité de l'émulsifiant soluble dans l'huile dans le prémélange est de 0,1 à 3 % en poids ; et
4 un processus de mélange de la phase huileuse et de la seconde phase aqueuse pour obtenir une composition d'huile et graisse à double émulsion eau-dans-huile-dans-eau.

6. Procédé de production d'un prémélange pour la préparation d'une composition d'émulsion selon la revendication 5, dans lequel des protéines solubles dans l'eau sont dissoutes dans la phase aqueuse.
